(19) Europäisches Patentamt
European Patent Office
Office européen des brevets

(11) **EP 1 664 552 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(21) Anmeldenummer: 04761933.3

(22) Anmeldetag: **21.09.2004**

(51) Int Cl.:
*F15B 15/10* (2006.01)      *B66F 3/40* (2006.01)
*B25J 9/14* (2006.01)      *B60R 22/195* (2006.01)

(86) Internationale Anmeldenummer:
**PCT/CH2004/000593**

(87) Internationale Veröffentlichungsnummer:
**WO 2005/031173 (07.04.2005 Gazette 2005/14)**

(54) **Pneumatischer Aktor**

Pneumatic actuator

Actionneur pneumatique

(84) Benannte Vertragsstaaten:
**AT BE BG CH CY CZ DE DK EE ES FI FR GB GR HU IE IT LI LU MC NL PL PT RO SE SI SK TR**

(30) Priorität: **26.09.2003 CH 164403**

(43) Veröffentlichungstag der Anmeldung:
**07.06.2006 Patentblatt 2006/23**

(73) Patentinhaber: **Prospective Concepts AG 8152 Glattbrugg (CH)**

(72) Erfinder: **LUCHSINGER, Rolf, H. CH-8607 Seegräben (CH)**

(74) Vertreter: **Salgo, Reinhold Caspar Dr. R.C. Salgo + Partner, Patentanwälte AG, Rütistrasse 103 8636 Wald ZH (CH)**

(56) Entgegenhaltungen:
EP-A- 0 219 327          WO-A-01/73245
WO-A-03/074885          CH-A- 583 652
DE-A- 2 848 651          DE-A- 10 108 371
DE-A- 19 730 838          US-A- 4 061 310
US-A- 5 203 319

EP 1 664 552 B1

**Beschreibung**

Die vorliegende Erfindung betrifft einen pneumatischen Aktor gemäss dem Oberbegriff des Patentanspruches 1.

Fluidische Aktoren ohne Hydraulik- oder Pneumatikzylinder sind explizite oder auch implizite mehrere bekannt, beispielsweise aus WO 03/074885 (D1) derselben Anmelderin.

In D1 ist der Aktor beispielsweise aus einer Druckkräfte aufnehmenden Platte und einer seitlich daran angebrachten Bahn aus hochfestem und dehnungsarmem textilem Gewebe aufgebaut. Diese Bahn ist entlang mehrerer Streifen an der Platte befestigt. Zwischen den Streifen sind Blasen aus elastischem Material in die Tasche zwischen Platte und Bahn eingeschoben. Bei Beaufschlagen dieser Blasen mit Druckluft wird ein Biegemoment auf die Platte ausgeübt und die Platte seitlich weggebogen.

Ein Nachteil dieses Aktors ist, dass die Druckkräfte von einer Platte aufgenommen werden und er dadurch eine gewisse flächige Ausdehnung nicht unterschreiten kann. Er ist zudem insbesondere geeignet zur Verformung von Flächen und Aufnahme von Linienlasten.

Die Aufgabe der vorliegenden Erfindung besteht in der Schaffung von fluidischen Aktoren ohne Pneumatik- oder Hydraulikzylinder, welche zur Bewegung grösserer Punktlasten geeignet sind.

Die Lösung der Aufgabe ist wiedergegeben im kennzeichnenden Teil des Anspruches 1 hinsichtlich ihrer wesentlichen Merkmale und in den weiteren Ansprüchen hinsichtlich ergänzender vorteilhafter Ausbildungen.

Anhand der beigefügten Zeichnungen wird der Erfindungsgegenstand anhand mehrerer Ausführungsbeispiele näher erläutert.

Es zeigen

Fig. 1a,b schematische Darstellungen eines ersten Ausführungsbeispiels eines aktivierten pneumatischen Aktors in Seitenansicht und Untenansicht,

Fig. 2 eine schematische Darstellung des ersten Ausführungsbeispiels in deaktiviertem Zustand in Seitenansicht,

Fig. 3a,b schematische Darstellungen eines zweiten Ausführungsbeispiels eines aktivierten pneumatischen Aktors in Seitenansicht und Untenansicht,

Fig. 4 eine schematische Darstellung des zweiten Ausführungsbeispiels in deaktiviertem Zustand in Seitenansicht,

Fig. 5 eine schematische Darstellung eines dritten Ausführungsbeispiels in deaktiviertem Zustand in Seitenansicht,

Fig. 6a,b eine schematische Darstellung eines vierten Ausführungsbeispiels in aktiviertem Zustand in Isometrie und Untenansicht,

Fig. 7 eine schematische Darstellung eines fünften Ausführungsbeispiels in Seitenansicht,

Fig. 8 eine schematische Darstellung eines sechsten Ausführungsbeispiels in isometrischer Darstellung,

Fig. 9a,b schematische Darstellungen eines siebten Ausführungsbeispiels in Seitenansicht,

Fig. 10 eine schematische Darstellung des Aktors des siebten Ausführungsbeispiels in Seitenansicht.

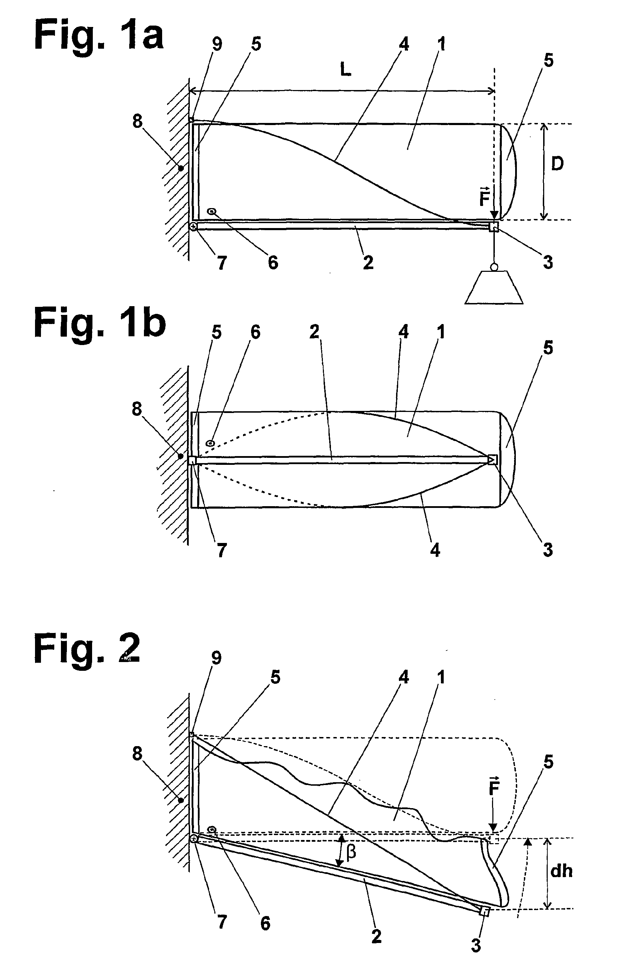

In den Fig. 1a,b ist ein erstes Ausführungsbeispiel schematisch dargestellt. Fig. 1a zeigt den aktivierten, mit Druck beaufschlagten Aktor in Seitenansicht und Fig. 1b in einer Ansicht von unten. Der gezeigte Aktor besteht aus einem langgestreckten, im Wesentlichen zylindrischen mit einem Druckfluid beaufschlagten Hohlkörper 1 der Länge L und dem Durchmesser D, welcher aus einem flexiblen und luftdichten Material gefertigt ist. Auf seiner Unterseite ist ein auf axiale Kräfte beanspruchbarer biegesteifer Druckstab 2 angebracht. Dessen freies Ende ist als Knoten 3 ausgestaltet, an dem je zwei Zugelemente 4 befestigt sind, und das andere Ende ist als Drehgelenk 7 ausgestaltet, welches den Druckstab 2 drehbar mit einem Bezugssystem 8, beispielsweise einer Wand, verbindet. Die Achse des Drehgelenkes 7 steht im Wesentlichen normal auf der durch den Druckstab 2 und den Befestigungspunkt 9 definierten Ebene. Die axialen Enden des Hohlkörpers 1 tragen je eine Kappe 5. Der Hohlkörper 1, beispielsweise die dem Bezugssystem 8 zugewandte Kappe 5, ist mit einem Ventil 6 zur Be- und Entlüftung des Hohlkörpers 1 ausgerüstet. Der Druckstab 2 ist entlang einer Mantellinie des Hohlkörpers 1 kraftschlüssig mit diesem verbunden. Bei im Wesentlichen druckbeaufschlagtem Hohlkörper 1 wird der Druckstab 2 durch den Hohlkörper 1 gegen Ausknicken gesichert.

Die zwei Zugelemente 4 umschlingen den Hohlkörper 1 schraubenförmig in entgegengesetztem Umlaufsinne je in einer halben Drehung mit konstanter Ganghöhe. Sie treffen einander an einem Befestigungspunkt 9 über dem Drehgelenk 7 liegend. An diesem Befestigungspunkt 9 sind die beiden Zugelemente 4 kraftschlüssig mit dem Bezugssystem 8 verbunden.

Dieses Ausführungsbeispiel entspricht strukturell einem halben pneumatischen Bauelement, wie in WO 01/73245 (D2) offenbart. Die Hälfte des pneumatischen Balkens aus D2 wird um 180 Grad um die Längsachse gedreht und die Mitte des Elements aus D2 wird mit dem Bezugssystem 8 verbunden. Die Lastkraft in D2 entspricht im Aktor der Auflagerkraft und die Auflagerkraft in D2 entspricht ebenfalls mit umgekehrter Richtung der neuen Lastkraft am freien Ende des Aktors.

Fig. 2 zeigt das erste Ausführungsbeispiel in drucklosem deaktiviertem Zustand; mit gestrichelten Linien ist der aktivierte Zustand angedeutet. Die Zugelemente 4 verbinden den Knoten 3 nun in direkter gerader statt schraubenförmiger Linie mit dem Befestigungspunkt 9. Dadurch wird der Druckstab 2 um den Winkel β von einer am Knoten 3 nach unten wirkenden Lastkraft $\underline{F}$ nach unten ausgelenkt.

$$\text{Für } \gamma = \text{L/D gilt: } \beta = \arcsin\left(\frac{1}{2\gamma}\left(\frac{\pi^2}{4} - 1\right)\right) \qquad \text{(Gl. 1)}$$

Dies ergibt für unterschiedliche $\gamma$ beispielsweise folgende Winkel $\beta$ : $\gamma = 10 \rightarrow \beta = 4.2°$ oder $\gamma = 5 \rightarrow \beta = 8.4°$.

Bei Beaufschlagen des Hohlkörpers 1 mit einem Druckfluid werden die Zugelemente 4 durch den sich aufblähenden Hohlkörper 1 aus der geraden Verbindungslinie zwischen dem Befestigungspunkt 9 und dem Knoten 3 in Schraubenform gezwungen und ziehen daher den Knoten 3 aus der deaktivierten Ausgangslage in die aktivierte Position wie in Fig. 1 gezeigt. Der Aktorstellweg $\underline{dh}$ ist vom Durchmesser $\underline{D}$ abhängig.

$$dh = L \cdot \sin\beta = L \cdot \left(\frac{1}{2\gamma}\left(\frac{\pi^2}{4} - 1\right)\right) = D \cdot \left(\frac{\pi^2}{8} - \frac{1}{2}\right) \approx 0.734 \cdot D \quad \text{(Gl. 2)}$$

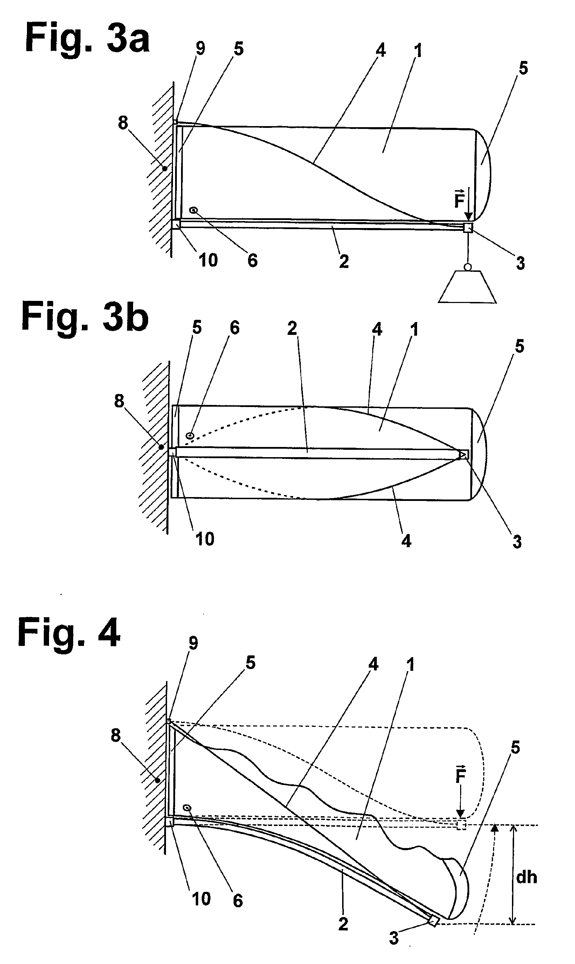

Die Fig. 3a,b zeigen ein zweites Ausführungsbeispiel in Seitenansicht und Untenansicht. Im Unterschied zum ersten Ausführungsbeispiel ist der Druckstab 2 als flexibles biegeelastisches Druckelement ausgeführt. Solche biegeelastischen Druckelemente wurden bereits im Dokument PCT/CH2004/00111 (D3) offenbart. Gleichzeitig muss der Druckstab 2 im Bezugssystem 8 mittels eines Verbindungsstückes 10 kraftschlüssig eingespannt und nicht drehbar gelagert sein.

Die Lastkraft $\underline{F}$, am freien Ende des Aktors auf den Knoten 3 wirkend, darf nicht so gross sein, dass der flexible biegeelastische Druckstab 2 geknickt wird.

Fig. 4 zeigt das zweite Ausführungsbeispiel in deaktiviertem Zustand.

Den beiden oben erwähnten Ausführungsbeispielen ist gemeinsam, dass die maximal ausübbare Aktorkraft bei maximalem Aktorstellweg erreicht wird, da die knickstabilisierende Wirkung des Hohlkörpers 1 mit zunehmendem Überdruck im Hohlkörper 1 ebenfalls grösser wird. Dies im Gegensatz zu den meisten anderen pneumatischen Aktoren, wie beispielsweise pneumatische Muskeln, wo die Aktorkraft mit zunehmendem Aktorstellweg abnimmt.

Die oben erwähnten Ausführungsbeispiele lassen sich auch mit konstantem Überdruck im Hohlkörper 1 betreiben und funktionieren so als sehr leichte und gleichzeitig sehr tragfähige Kragarme. In dieser Funktion können zusätzliche Druckstäbe 2 mit zugehörigen Paaren von Zugelementen 4 um den Hohlkörper 1 angeordnet werden, um Belastungen des Kragarmes in mehr als eine transversale Richtung zu ermöglichen. Für die Aufnahme von Kräften aus allen transversalen Richtungen sind mindestens drei Druckstäbe 2 notwendig. Bei Einsatz als Aktor bleibt die Anzahl an Druckstäben jedoch auf einen einzigen beschränkt.

Ein solcher Kragarm besitzt ausserdem sehr gute Dämpfungseigenschaften und kann bei Lastvariationen und Schwingungen als kombiniertes Dämpfungs-, Feder- und Tragstrukturelement eingesetzt werden.

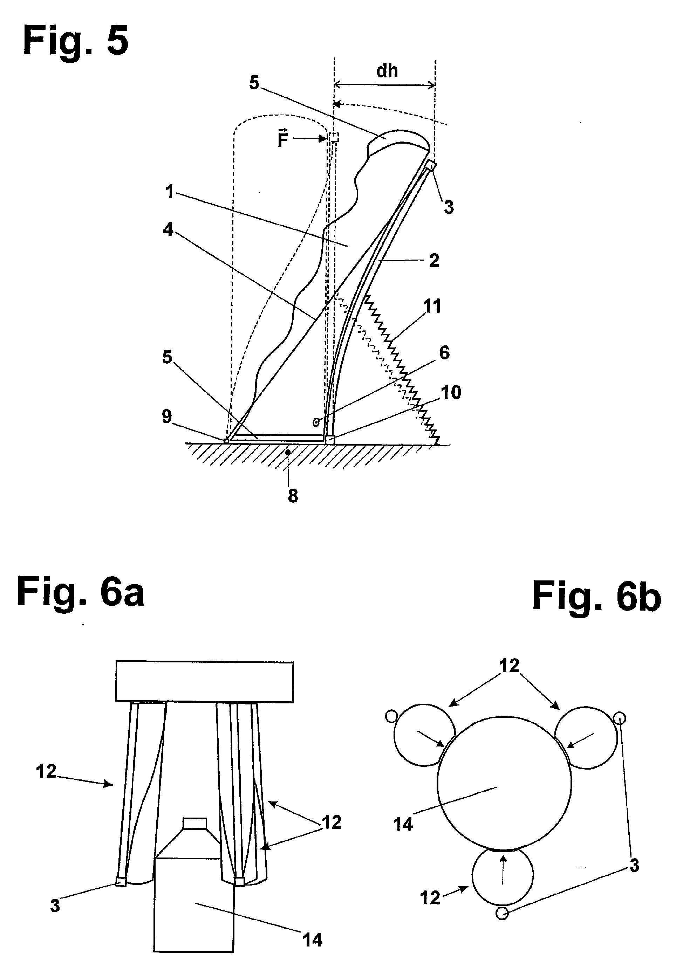

Fig. 5 zeigt ein drittes Ausführungsbeispiel eines pneumatischen Aktors in deaktiviertem Zustand; der aktivierte Zustand ist mit gestrichelten Linien angedeutet. Falls der Aktor nicht so montiert werden kann, dass die Gewichtskraft von Druckstab 2, Zugelementen 4 und Hohlkörper 1 als rückstellende Kraft wirkt und der Aktor der Schwerkraft entgegenwirkt, kann die Rückstellung des Aktors in die deaktivierte Ausgangslage mit entleertem Hohlkörper 1 beispielsweise mittels eines Federelementes 11 erfolgen, welches am Bezugssystem 8 und am Druckstab 2 befestigt ist. Die Funktion des Federelementes 11 kann beispielsweise durch eine Spiralfeder aus Stahl oder ein Elastomer übernommen werden.

Dabei spielt es keine Rolle, ob das erste oder zweite Ausführungsbeispiel entsprechend erweitert wird. Beim ersten Beispiel kann das Federelement 11 direkt ins Drehgelenk 7 integriert werden. Vom zweiten Ausführungsbeispiel ausgehend, ist es zudem denkbar und erfindungsgemäss, dass der Druckstab 2 selbst als Feder wirkt und selbständig die deaktivierte, bogenförmige Ausgangslage einnimmt.

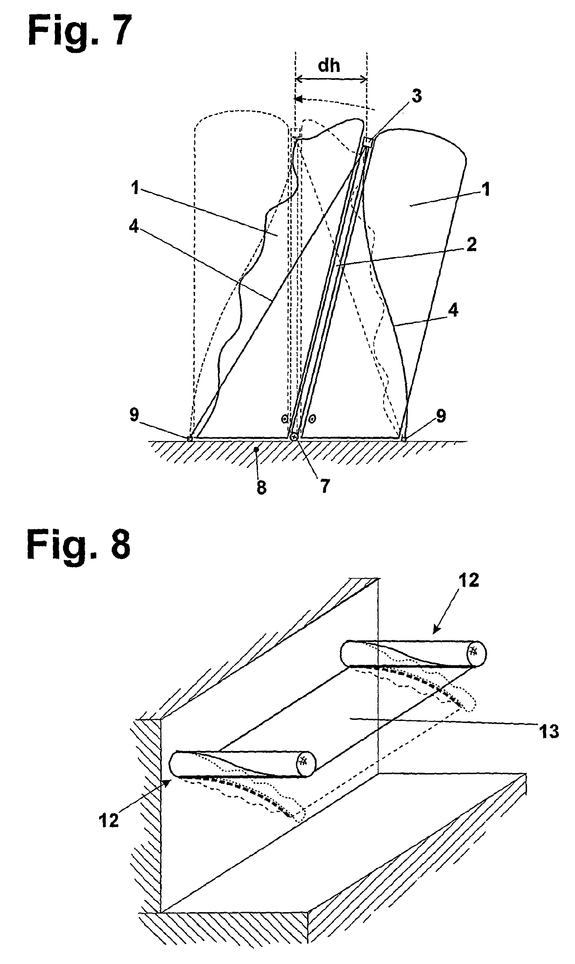

In einem vierten Ausführungsbeispiel in den Fig. 6a,b bilden drei pneumatische Aktoren 12 gemäss dem dritten Ausführungsbeispiel eine Greifvorrichtung, beispielsweise für Flaschen 14. Die Fig. 6a zeigt eine Seitenansicht der Greifvorrichtung und Fig. 6b zeigt eine Ansicht von unten. Die drei Aktoren 12 sind gleichmässig über den Umfang eines Kreises angeordnet und wirken in radialer Richtung gegen den Mittelpunkt. Die Greifvorrichtung wird mit deaktivierten Aktoren 12 über der Flasche 14 positioniert. Bei Aktivierung der Aktoren 12 schliessen sich diese fest um die Flasche 14 und die Greifvorrichtung kann mitsamt der Flasche umpositioniert werden. Der Kontakt zum gegriffenen Gegenstand, wird in diesem Ausführungsbeispiel direkt mittels der beispielsweise antirutschbeschichteten Hohlkörper 1 hergestellt. Diese Anordnung ist insbesondere zum Greifen zerbrechlicher Gegenstände interessant. Es sind aber auch Ausführungen erfindungsgemäss, bei welchen spezielle Greifkörper beispielsweise an den Knoten 3 befestigt werden und der pneumatische Aktor 12 selbst nie in direkten Kontakt mit dem gegriffenen Gegenstand kommt. In Fig. 7 ist ein fünftes Ausführungsbeispiel eines pneumatischen Aktors dargestellt. Die aktive Bewegung der oben erwähnten Aktoren geht nur in eine Richtung. Für die Rückstellung des Aktors wird somit eine weitere Kraft, wie beispielsweise eine Federkraft oder die Schwerkraft benötigt. Im fünften Ausführungsbeispiel ist zusätzlich ein zweiter Hohlkörper 1 mit einem Paar Zugelementen 4 vorhanden, welcher als Antagonist der ersten Hohlkörper-Zugelementanordnung entgegenwirkt. Dadurch können beide Extrempositionen (in Fig. 7 mit gestrichelten und ausgezogenen Linien dargestellt) des Aktorstellweges durch den Aktor aktiv eingenommen werden. Der dargestellte Aktor basiert auf dem ersten Ausführungsbeispiel mit einem Drehgelenk 7 und biegesteifem Druckstab 2. Ein Aktor dieser Art kann aber ebensogut auf dem zweiten Ausführungsbeispiel mit biegeelastischem Druckstab 2 ,welcher mittels Verbindungsstück 10 kraftschlüssig eingespannt ist, basierend realisiert werden. Die beiden Befestigungspunkte 9 und das Drehgelenk 7 oder das Verbindungsstück 10 liegen im Wesentlichen auf einer Geraden.

Fig. 8 zeigt ein sechstes Ausführungsbeispiel und eine weitere Anwendungsmöglichkeit für einen pneumatischen Aktor. Zwei pneumatische Aktoren 12 gemäss den Fig. 3,4, welche als bewegliche Kragarme an einer Wand montiert sind, spannen eine Membran 13 zu einem Vordach auf. Mit gestrichelten Linien sind die pneumatischen Aktoren 12 in deaktivierter Position dargestellt. In dieser Lage kann die Membran 13 mühelos an den Druckstäben 2 beispielsweise an Ösen eingehängt werden. Die als Dach fungierende wasserdichte Membran 13 wird bei Aktivierung der Aktoren 12 in axialer Richtung der Druckstäbe 2 straff gespannt.

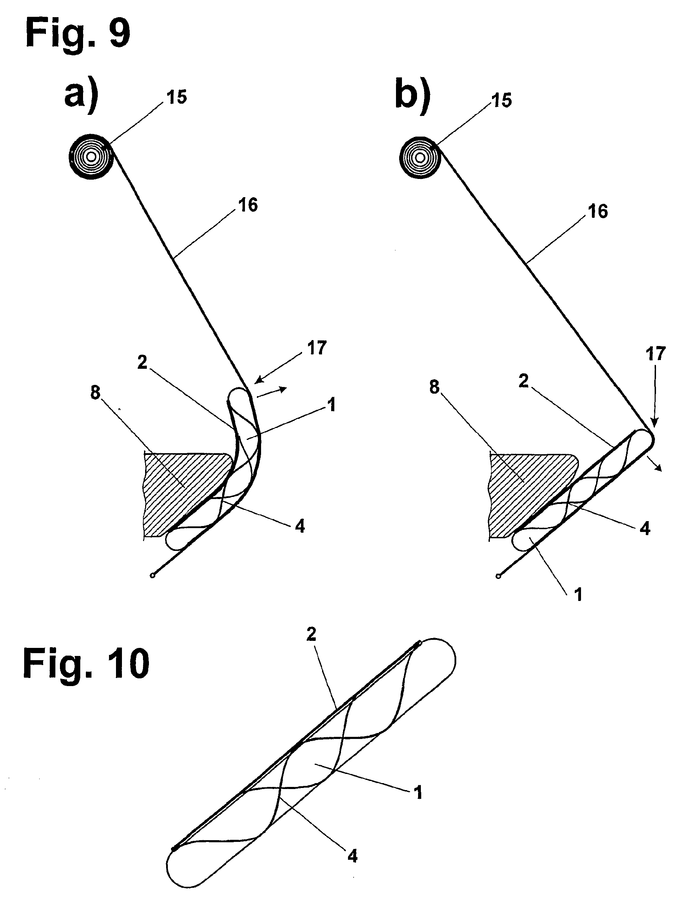

In den Fig. 9a,b ist ein siebtes Ausführungsbeispiel eines erfindungsgemässen Aktors für eine Anwendung als Gurtdiener, beispielsweise in einem Motorfahrzeug, dargestellt. Der gebogene, nicht aktivierte, das heisst nicht mit Druck beaufschlagte Aktor weist auf der Bogeninnenseite einen biegeelastischen Druckstab 2 auf. Der durch die Aufrollvorrichtung 15 gespannte Gurt 16 zieht den inaktiven Aktor in eine Bogenform. Die Einnahme dieser Bogenform kann durch ein geeignet geformtes, als Anschlag dienendes Bezugssystem 8 unterstützt werden. Der Hohlkörper 1 wird von mindestens einem Paar Zugelementen 4 jeweils paarweise im gegenläufigen Umlaufsinn mindestens in einem ganzen Umgang schraubenförmig umschlungen. Im Gegensatz zu den vorangehend gezeigten Ausführungsbeispielen sind die Zugelemente 4 in einer ganzen oder einem Vielfachen an vollständigen Windungen um den Hohlkörper 1 gelegt und an beiden Enden des Aktors mit dem Druckstab 2 verbunden. Für die kraftschlüssige Verbindung von Druckstab 2 und Zugelementen 4 können je Knoten 3 an den beiden Enden des Druckstabes 2 vorhanden sein. Die Verbindung der Zugelemente 4 mit dem Druckstab 2 können über die ganze Länge des Druckstabs 2 angebracht sein, um bei Biegung des Aktors günstige Angriffswinkel der Zugelemente 4 an den Druckstab 2 zu ermöglichen. Zu diesem Zweck können auch mehr als zwei am Druckstab 2 befestigte Knoten 3 angebracht sein. Der Druckstab 2 oder ein Teil des Aktors kann an einem ersten Ende mit dem Bezugssystem 8 verbunden sein. Diese Befestigung ist nicht zwingend notwendig. Ein als Anschlag geformtes Bezugssystem 8 kann genügen, um das erste Ende des Aktors bei Druckbeaufschlagung zwischen Gurt 16 und Bezugssystem 8 einzuklemmen. Es ist auch denkbar, das s ein erstes Ende des Hohlkörpers 1 allein oder zusammen mit dem ersten Ende des Druckstabes 2 kraftschlüssig mit dem Bezugssystem 8 verbunden ist. Der Gurt 16 ist teilweise oder über die ganze Länge des Aktors mit dem Aktor verbunden. Mindestens jedoch besteht zwischen Gurt 16 und Aktor am bewegtem Ende 17 des Aktors eine Verbindung. Für solche Verbindungen sind dem Fachmann viele Möglichkeiten bekannt, beispielsweise können sie mittels Laschen, einer Tasche oder durch Kleben oder Nähen hergestellt werden. Wird der Hohlkörper 1 mit Druckluft beaufschlagt, so wird der Aktor bewegt und der Gurt 16 dadurch nach vorne gereicht, wonach der Gurt 16 vom Insassen bequem greifbar ist.

Fig. 10 zeigt den Aktor des siebten Ausführungsbeispiels im Detail. Wird eine Seite dieses Aktors am Bezugssystem 8 befestigt oder eingespannt, so kann der Aktor bei Beaufschlagung des Hohlkörpers 1 mit Druckluft in Richtung der dem Druckstab 2 entgegengesetzten Seite eine Kraft ausüben.

Es ist denkbar und erfindungsgemäss, für die Anwendung als Gurtdiener einen Aktor gemäss den ersten sechs Ausführungsbeispielen zu verwenden.

**Patentansprüche**

1. Pneumatischer Aktor in der Form eines Kragarmes
**dadurch gekennzeichnet, dass**

   - ein luftdichter und durch mindestens ein Ventil (6) mit Druckluft beaufschlagbarer langgestreckter Hohlkörper (1) aus flexiblem Material vorhanden ist,
   - mindestens ein Druckstab (2) vorhanden ist, und dieser längs einer Mantellinie des Hohlkörpers (1) an diesem anliegt und gegen Verschieben und Ausknicken gesichert ist, ferner
   - dass mindestens ein Paar von Zugelementen (4) vorhanden ist, welche paarweise in gegenläufigem Drehsinn schraubenförmig um den Hohlkörper (1) gelegt sind,
   - und dass ein erstes Ende des Aktors mit einem Bezugssystem (8) verbunden ist und ein zweites Ende (17) des Aktors relativ zum Bezugssystem (8) in Abhängigkeit von der Druckluftbeaufschlagung des Hohlkörpers (1) eine Bewegung ausführen und/oder Kraft ausüben kann.

2. Pneumatischer Aktor nach Patentanspruch 1, **dadurch gekennzeichnet, dass**

   - der Druckstab an einem Ende mit einem Bezugssystem (8) verbunden ist, ferner
   - das mindestens eine Paar von Zugelementen (4), einerseits an einem freien Ende des Druckstabes (2) befestigt ist, zu welchem Zweck der Druckstab (2) am freien Ende einen Knoten (3) aufweist zur gegenseitigen kraftschlüssigen Befestigung von Druckstab (2) und Zugelementen (4) und zur Aufnahme von Lastkräften,
   - wobei des Weiteren das mindestens eine Paar von Zugelementen (4) mit einem halben Umgang schraubenförmig gegenläufig um den Hohlkörper (1) herumgelegt ist und andererseits an einem kraftschlüssig mit dem Bezugssystem (8) verbundenen Befestigungspunkt (9) seinerseits kraftschlüssig verbunden ist,
   - wobei der Befestigungspunkt (9) und der Druckstab (2) in der Bewegungsebene des Aktors liegen.

3. Pneumatischer Aktor nach Patentanspruch 2, **dadurch gekennzeichnet, dass**

   - der Druckstab (2) an einem Ende mittels eines kraftschlüssig mit dem Bezugssystem (8) verbundenen Verbindungsstückes (10) kraftschlüssig eingespannt ist, wobei
   - die axiale Richtung des im Verbindungsstück (10) eingespannten Endes des Druckstabes (2) auch unter Belastung des Knotens (3) im Wesentlichen unverändert bleibt,
   - der Druckstab (2) aus flexiblem biegeelastischem Material gefertigt ist und unter Belastung des Knotens (3) gebogen wird.

4. Pneumatischer Aktor nach Patentanspruch 2, **dadurch gekennzeichnet, dass**

   - der Druckstab (2) mittels eines Drehgelenkes (7) drehbar und kraftschlüssig mit dem Bezugssystem (8) verbunden ist, wobei
   - die Drehachse des Drehgelenkes (7) sowohl auf der axialen Richtung des Druckstabes (2) als auch auf der Verbindungslinie Drehgelenk (7) zum Befestigungspunkt (9) rechtwinklig steht, ferner
   - der Druckstab (2) aus biegesteifem Material gefertigt ist.

5. Pneumatischer Aktor nach einem der Patentansprüche 1 bis 4, **dadurch gekennzeichnet, dass** der Aktor mittels eines Federelementes (11) aus der aktivierten Position in die deaktivierte Position zurückgestellt wird.

6. Pneumatischer Aktor nach einem der Patentansprüche 1 bis 4, **dadurch gekennzeichnet, dass** der Aktor in der durch den Druckstab (2) und den Befestigungspunkt (9) gebildeten Ebene einen weiteren Befestigungspunkt (9) am Bezugssystem (8) aufweist und zudem einen zweiten Hohlkörper (1) sowie mindestens ein weiteres Paar Zugelemente (4) aufweist, wodurch beide Extrempositionen des Aktorstellweges durch den Aktor aktiv eingenommen werden können.

7. Pneumatischer Aktor nach Patentanspruch 1, **dadurch gekennzeichnet, dass**

   - der Druckstab (2) aus biegeelastischem Material gefertigt ist,
   - das mindestens eine Paar Zugelemente (4) in einer ganzen oder in Vielfachen einer ganzen Windung um den Hohlkörper (1) herumgelegt sind,
   - das mindestens eine Paar von Zugelementen (4) je an beiden Enden des Druckstabes (2) kraftschlüssig befestigt ist.

8. Pneumatischer Aktor nach Patentanspruch 7, **dadurch gekennzeichnet, dass** der Druckstab (2) am ersten Ende des Aktors teilweise kraftschlüssig mit dem Bezugssystem (8) verbunden ist.

9. Pneumatischer Aktor nach einem der Patentansprüche 1 bis 8, **dadurch gekennzeichnet, dass** Mittel vorhanden sind zur Druckluftbeaufschlagung des Hohlkörpers (1) und zum Ablassen der Luft aus dem Hohlkörper (1).

10. Verwendung eines pneumatischen Aktors nach einem der Patentansprüche 1 bis 9 als dämpfendes Federelement.

11. Verwendung mindestens zweier pneumatischer Aktoren nach einem der Patentansprüche 1 bis 9 als Greifvorrichtung.

12. Verwendung eines pneumatischen Aktors nach einem der Patentansprüche 1 bis 9 als Kragarm mit konstanter Druckbeaufschlagung des Hohlkörpers.

13. Verwendung eines pneumatischen Aktors nach einem der Patentansprüche 1 bis 9 zur Herstellung eines pneumatisch betriebenen Gurtdieners.

**Claims**

1. A pneumatic actuator in the form of a cantilever, **characterised in that**

   - an airtight and elongated hollow body (1) of flexible material pressurised with compressed air by means of at least one valve (6) is present,
   - at least one compression member (2) is present, and the latter lies along a surface line of the hollow body (1) adjacent to the latter and is secured against displacement and buckling, furthermore
   - that at least one pair of tension elements (4) is present, which are laid pairwise in an opposite sense of rotation around the hollow body (1) in a helical fashion,
   - and that a first end of the actuator is connected to a reference system (8) and a second end (17) of the actuator can perform a movement and/or exert a force relative to the reference system (8) depending on the pressurisation of the hollow body (1) with compressed air.

2. The pneumatic actuator according to claim 1, **characterised in that**

   - the compression member is connected at one end to a reference system (8), furthermore
   - the at least one pair of tension elements (4) are fixed on the one hand to a free end of the compression member (2), for which purpose the compression member (2) has a node (3) at the free end for the mutual friction-locked fixing of compression member (2) and tension elements (4) and so as to take up load forces,
   - whereby, furthermore, the at least one pair of tension elements (4) is laid around the hollow body (1) in a helical and countra-rotational fashion with a half convolution and, on the other hand, is connected for its part in a friction-locked manner to a fixing point (9) connected in a friction-locked manner to the reference system (8),
   - whereby the fixing point (9) and the compression member (2) lie in the plane of motion of the actuator.

3. The pneumatic actuator according to claim 2, **characterised in that**

   - the compression member (2) is clamped at one end in a friction-locked manner by means of a connection piece (10) connected in a friction-manner to the reference system (8),
   - the axial direction of the end of the compression member (2) clamped in the connection piece (10) remains essentially unchanged even under loading of the node (3),
   - the compression member (2) is produced from flexible, flexurally elastic material and is bent under loading of the node (3).

4. The pneumatic actuator according to claim 2, **characterised in that**

   - the compression member (2) is connected in a rotary and friction-locked manner to the reference system (8) by means of a hinge (7),

- the rotary axis of the hinge (7) stands at right angles both to the axial direction of the compression member (2) and to the connecting line of the hinge (7) to the fixing point (9),
- the compression member (2) is produced from flexurally stiff material.

5. The pneumatic actuator according to any one of claims 1 to 4, **characterised in that** the actuator is reset from the activated position into the deactivated position by means of a spring element (11).

6. The pneumatic actuator according to any one of claims 1 to 4, **characterised in that** the actuator has a further fixing point (9) to the reference system (8) in the plane formed by the compression member (2) and the fixing point (9) and has in addition a second hollow body (1) as well as at least one further pair of tension elements (4), as a result of which the two extreme positions of the actuator regulating path can actively be occupied by the actuator.

7. The pneumatic actuator according to claim 1, **characterised in that**

- the compression member (2) is produced from flexurally elastic material,
- the at least one pair of tension elements (4) are laid around the hollow body (1) in a whole turn or in multiples of a whole turn,
- the at least one pair of tension elements (4) is fixed in a friction-locked manner respectively to the two ends of the compression member (2).

8. The pneumatic actuator according to claim 7, **characterised in that** the compression member (2) is connected to the reference system (8) partially in a friction-locked manner at the first end of the actuator.

9. The pneumatic actuator according to any one of claims 1 to 8, **characterised in that** means are present for pressurisation of the hollow body (1) with compressed air and for blowing the air out of the hollow body (1).

10. Use of a pneumatic actuator according to any one of claims 1 to 9 as a damping spring element.

11. Use of at least two pneumatic actuators according to any one of claims 1 to 9 as a gripping device.

12. Use of a pneumatic actuator according to any one of claims 1 to 9 as a cantilever with constant pressurisation of the hollow body.

13. Use of a pneumatic actuator according to any one of claims 1 to 9 for the production of a pneumatically driven belt server.


**Revendications**

1. Acteur pneumatique sous forme de bras en saillie, **caractérisé en ce qu'**un

- corps creux (1) en matériau flexible, étiré en longueur, étanche à l'air et pouvant être alimenté en air comprimé par au moins une soupape (6), est prévu,
- au moins une tige de compression (2) est prévue, et celle-ci est positionnée sur le corps creux (1) le long d'une génératrice de celui-ci et est sécurisée contre le déplacement ou le flambage, en outre,
- **en ce qu'**au moins une paire d'éléments de traction (4) est prévue, lesquels sont placés autour du corps creux (1) de manière hélicoïdale par paire dans le sens de rotation inverse,
- et **en ce qu'**une première extrémité de l'acteur est reliée à un système de repérage (8) et une deuxième extrémité (17) de l'acteur par rapport au système de repérage (8) peut exercer un mouvement et/ou une force en fonction de l'alimentation en air comprimé du corps creux (1).

2. Acteur pneumatique selon la revendication 1, **caractérisé en ce que**

- la tige de compression est reliée à un système de repérage (8) sur une extrémité, en outre,
- **en ce qu'**au moins une paire d'éléments de traction (4) est fixée d'une part sur une extrémité libre de la tige de compression (2), ce pour quoi la tige de compression (2) présente sur l'extrémité libre un noeud (3) pour la fixation réciproque par adhérence de la tige de compression (2) et des éléments de traction (4) et pour absorber des forces mécaniques,

- moyennant quoi en outre l'au moins une paire d'éléments de traction (4) est placée avec un demi-tour de manière hélicoïdale en se déplaçant en sens contraire autour du corps creux (1) et d'autre part est reliée pour sa part par adhérence sur un point de fixation (9) relié par adhérence au système de repérage (8),
- moyennant quoi le point de fixation (9) et la tige de compression (2) reposent sur le plan de déplacement de l'acteur.

3. Acteur pneumatique selon la revendication 2, **caractérisé en ce que**

- la tige de compression (2) est tendue par adhérence sur une extrémité au moyen d'une pièce de liaison (10) reliée par adhérence au système de repérage (8), moyennant quoi
- le sens axial de l'extrémité de la tige de compression (2) tendue dans la pièce de liaison (10) reste essentiellement inchangé même sous la charge du noeud (3),
- la tige de compression (2) est fabriquée en matériau flexible élastique en flexion et est courbée sous la charge du noeud (3).

4. Acteur pneumatique selon la revendication 2, **caractérisé en ce que**

- la tige de compression (2) est reliée de manière rotative et par adhérence au système de repérage (8) au moyen d'une articulation rotative (7), moyennant quoi
- l'axe de rotation de l'articulation rotative (7) est angulaire aussi bien sur le sens axial de la tige de compression (2) que sur la ligne de liaison de l'articulation rotative (7) au point de fixation (9), en outre
- la tige de compression (2) est fabriquée en matériau rigide à la flexion.

5. Acteur pneumatique selon l'une des revendications 1 à 4 **caractérisé en ce que** l'acteur est ramené de la position activée à la position désactivée au moyen d'un élément élastique (11).

6. Acteur pneumatique selon l'une des revendications 1 à 4 **caractérisé en ce que** l'acteur présente dans le plan formé par la tige de compression (2) et le point de fixation (9) un autre point de fixation (9) sur le système de repérage (8) et présente en outre un deuxième corps creux (1) ainsi qu'au moins une autre paire d'éléments de traction (4), par lesquels les deux positions extrêmes du parcours de réglage de l'acteur peuvent être adoptées de manière active par l'acteur.

7. Acteur pneumatique selon la revendication 1, **caractérisé en ce que**

- la tige de compression (2) est fabriquée en matériau élastique en flexion,
- qu'au moins une paire d'éléments de traction (4) est enroulée en un tout ou en plusieurs fois d'un tour complet autour du corps creux (1),
- qu'au moins une paire d'éléments de traction (4) est fixée par adhérence respectivement sur les deux extrémités de la tige de compression (2).

8. Acteur pneumatique selon la revendication 7, **caractérisé en ce que** la tige de compression (2) est reliée partiellement par adhérence au système de repérage (8) sur la première extrémité de l'acteur.

9. Acteur pneumatique selon l'une des revendications 1 à 8, **caractérisé en ce que** des moyens sont prévus pour alimenter le corps creux (1) en air comprimé et pour évacuer l'air du corps creux (1).

10. Utilisation d'un acteur pneumatique selon l'une des revendications 1 à 9, comme élément élastique amortisseur.

11. Utilisation d'au moins deux acteurs pneumatiques selon l'une des revendications 1 à 9 comme élément de prise.

12. Utilisation d'un acteur pneumatique selon l'une des revendications 1 à 9 comme bras de saillie avec une alimentation constante du corps creux en air comprimé.

13. Utilisation d'un acteur pneumatique selon l'une des revendications 1 à 9 pour créer un distributeur de ceinture à entraînement pneumatique.

Fig. 1a

Fig. 1b

Fig. 2

# Fig. 3a

# Fig. 3b

# Fig. 4

# Fig. 5

# Fig. 6a

# Fig. 6b

# Fig. 7

# Fig. 8

# Fig. 9

## a)

## b)

# Fig. 10